# FASCICULE DE BREVET EUROPEEN

(11) **EP 0 614 779 B1**
(45) Date de publication et mention de la délivrance du brevet: **20.01.1999**
(21) Numéro de dépôt: 93401434.1
(22) Date de dépôt: 04.06.1993
(51) Int. Cl.: B60K 37/06, G05G 1/10, B60H 1/00

(54) **Tableau de commande à éclairage intégré, notamment pour véhicule automobile**
Steuertafel mit integrierter Beleuchtung, insbesondere für Kraftfahrzeuge
Control board with integrated illumination, especially for motor vehicles

(30) Priorité: 08.03.1993 FR 9302660
(43) Date de publication de la demande: 14.09.1994
(73) Titulaire: VALEO THERMIQUE HABITACLE, 78320 Le Mesnil-Saint-Denis (FR)
(72) Inventeur: Ledu, Jean Claude, F-78310 Maurepas (FR)
(74) Mandataire: Gamonal, Didier

(56) Documents cités:
- DE-U- 9 212 971
- US-A- 2 713 103
- US-A- 5 093 764

## Description

L'invention concerne un tableau de commande à éclairage intégré, en particulier pour véhicule automobile.

Elle concerne plus particulièrement un tableau de commande du type comprenant un panneau de façade ménageant au moins une ouverture circulaire, un bouton de commande rotatif logé dans l'ouverture circulaire, une source de lumière placée en arrière du panneau de façade et des repères portés par le panneau de façade et/ou le bouton de commande et sensibles à la lumière émise par la source.

Un tableau de ce type peut être utilisé notamment pour la commande d'un appareil de chauffage/ventilation de l'habitacle d'un véhicule automobile. Ce tableau peut alors comprendre, par exemple, trois boutons rotatifs pour régler respectivement la vitesse d'un ventilateur envoyant de l'air dans l'habitacle, la température de cet air et la distribution de cet air au travers de différentes bouches communiquant avec l'habitacle.

La source de lumière contenue dans le tableau de commande permet, d'une part, de visualiser le tableau de commande la nuit et, d'autre part, d'éclairer les différents symboles prévus sur le tableau et le ou chaque bouton rotatif, ce qui permet d'amener le bouton, généralement pourvu d'un index, en regard d'un repère correspondant à une position désirée.

L'un des inconvénients présentés par un tel tableau de commande réside dans le fait qu'une partie de la lumière émise par la source tend à s'échapper dans l'intervalle annulaire compris entre le bouton rotatif et le bord de l'ouverture circulaire correspondante, ce qui peut constituer une gêne pour le conducteur et éventuellement son passager.

Pour remédier à cet inconvénient, on peut, comme enseigné par le document FR-A-2 299 676, prévoir un disque solidaire en rotation du bouton et interposé entre la source de lumière et le panneau de façade du tableau.

Mais, la présence d'un tel disque constitue une solution compliquée qui a en outre l'inconvénient de ne pas permettre un montage ou un démontage aisé du panneau de façade lors de l'installation du tableau de commande sur un véhicule en cours de fabrication, ou lors de l'enlèvement du tableau de commande pour le remplacement de la source de lumière défaillante.

Il est également connu par le document US-A-2 713 103 un tableau de commande dans lequel le bouton de commande est muni d'une gorge périphérique circulaire dans laquelle pénètre une nervure circulaire rattachée au panneau de façade et entourant l'ouverture circulaire.

Cette disposition présente l'inconvénient selon lequel la lumière émise par la source lumineuse ne rencontre aucun obstacle et peut passer entre l'extrémité de la nervure et le fond de la gorge qui, de par sa coopération de forme avec cette nervure, va réfléchir les différents rayons lumineux jusqu'à les projeter sur la face extérieure de la façade.

L'invention a notamment pour but de surmonter les inconvénients précités.

C'est en particulier un but de l'invention de procurer un tableau de commande du type précité, dans lequel des moyens particulièrement simples sont prévus pour empêcher la lumière de passer entre le bouton rotatif et le bord de l'ouverture circulaire qui l'entoure.

C'est encore un but de l'invention de procurer un tel tableau de commande dont le panneau de façade peut être facilement monté ou démonté, sans qu'il soit nécessaire d'enlever le bouton rotatif.

C'est également un but de l'invention de procurer un tel panneau de commande qui peut être utilisé pour divers appareils faisant partie d'un véhicule automobile.

L'invention propose à cet effet un tableau de commande du type défini en introduction dans lequel, dans le but d'empêcher la lumière de passer entre le panneau de façade et le bouton de commande, la gorge périphérique circulaire tourne sa concavité vers l'avant, du côté opposé à la source de lumière, tandis que la nervure circulaire s'étend vers l'arrière, du côté de la source de lumière.

De cette manière, on crée une sorte de chicane constituant un "piège à lumière" empêchant la lumière de passer dans l'intervalle annulaire compris entre le bouton rotatif et le bord de l'ouverture circulaire.

L'invention prévoit en outre que la gorge et la nervure sont en matériau absorbant ou réfléchissant la lumière, ou bien revêtus d'un tel matériau.

Selon une autre caractéristique de l'invention, le bouton de commande comporte une robe cylindrique, et la gorge périphérique circulaire est formée par un bord roulé vers l'extérieur qui prolonge la robe cylindrique.

La gorge périphérique circulaire comporte avantageusement un fond à section semi-circulaire.

De préférence, la nervure circulaire s'étend dans une direction sensiblement perpendiculaire par rapport au panneau de façade.

Avantageusement, la gorge périphérique circulaire et la nervure circulaire ménagent entre elles un jeu maximal de 1 mm.

L'invention s'applique en particulier à un tableau de commande du type comprenant une boîte à lumière sur laquelle est monté le panneau de façade. Le panneau de façade est alors installé sur la boîte à lumière préalablement équipée du bouton, la nervure circulaire du panneau de façade venant, au cours du montage, pénétrer dans la gorge périphérique circulaire du bouton de commande.

De cette manière, le panneau de façade peut être facilement monté ou démonté, sans nécessiter un démontage et un remontage du bouton de commande.

Dans la description qui suit, faite à titre d'exemple, on se réfère au dessin annexé, sur lequel :
- la figure 1 est une vue en coupe transversale d'un panneau de commande selon l'invention, le plan de coupe passant par l'axe de rotation du bouton; et
- la figure 2 représente, à échelle agrandie, le détail A de la figure 1.

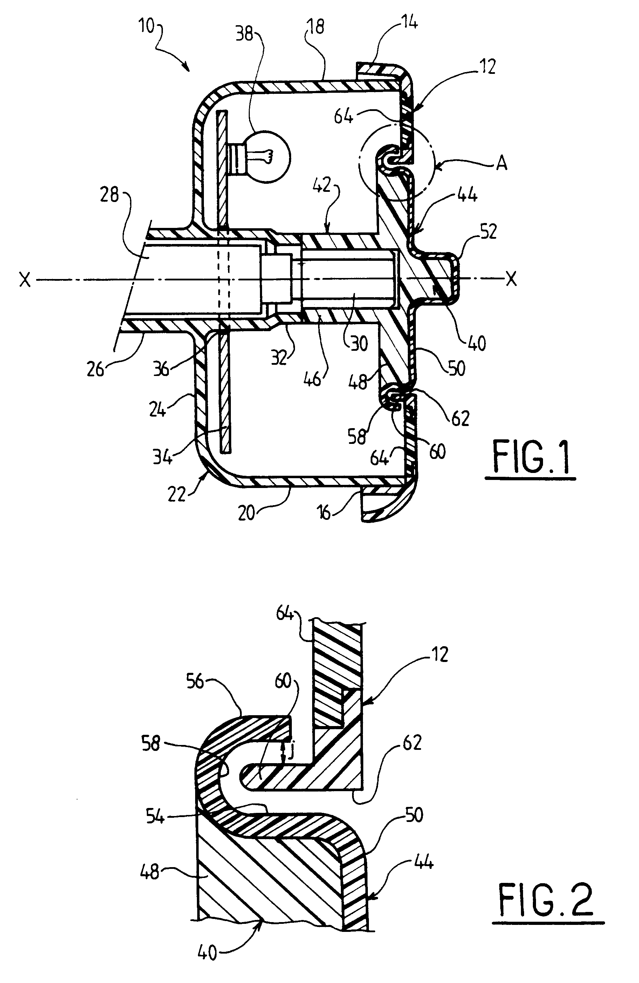

On se réfère tout d'abord à la figure 1 qui représente un tableau de commande 10 comprenant un panneau de façade 12 de forme générale rectangulaire muni de bords opposés 14 et 16 permettant son clipsage sur les parois latérales 18 et 20 d'un boîtier 22, encore appelé "boîte à lumière". Le panneau 12 ménage une ouverture circulaire 62 d'axe XX.

Le boîtier 22 comprend un fond annulaire 24 traversé par un fût cylindrique 26, d'axe XX, traversé par un arbre cylindrique 28, de même axe, pourvu d'une extrémité cannelée 30 dépassant d'une extrémité libre 32 du fût 26.

A l'intérieur du boîtier 22 est prévue, du côté du fond 24, une plaquette 34 de circuit imprimé munie d'un trou 36 pour le passage du fût 26 et supportant une lampe 38 qui constitue une source de lumière qui dirige de la lumière vers l'ouverture du boîtier 22.

Sur l'extrémité cannelée 30 de l'arbre 28 est emmanché en force un bouton 40 formé d'un corps 42 et d'un habillage 44 et passant à travers l'ouverture circulaire 62 du panneau 12.

Le corps 42 comprend un manchon 46 emmanché à force sur l'extrémité cannelée 30 et un chapeau 48 supportant l'habillage 44. Ce dernier est réalisé sous la forme d'un disque 50 qui s'étend sensiblement dans le plan du panneau de façade 12 et qui est surmonté par une barrette transversale 52 permettant la manoeuvre en rotation du bouton 40.

Le disque 50 est prolongé par une robe cylindrique 54, d'axe XX, qui se prolonge par un bord 56 roulé vers l'extérieur, définissant une gorge périphérique circulaire 58. La gorge 58 tourne sa concavité vers l'avant, c'est-à-dire du côté opposé à la source de lumière 38 et elle comporte un fond à section semi-circulaire.

En pratique, l'habillage 44 avec le disque 50, la barrette 52, la jupe 54 et le bord 56 sont en matière réfléchissant ou absorbant la lumière.

Dans la gorge 58 pénètre une nervure circulaire 60 centrée sur l'axe XX et faisant partie du panneau 12.

De même, cette nervure circulaire est en matière réfléchissant ou absorbant la lumière.

La nervure circulaire 60 s'étend dans une direction perpendiculaire à celle du panneau 12, vers l'arrière de ce panneau, c'est-à-dire du côté de la source de lumière 38. Cette nervure borde l'ouverture circulaire 62 logeant le bouton de commande 40 (figures 1 et 2). La gorge 58 et la nervure 60 ménagent entre elles un jeu maximal j de 1 mm.

Le panneau de façade 12 comprend des repères transparents 64 disposés dans son épaisseur et situés autour de l'ouverture 62 pour servir de repères à différentes positions du bouton rotatif 50. Celui-ci est avantageusement muni d'un index (non représenté) également transparent qui peut être prévu par exemple à l'une des extrémités de la barrette 52.

Ces différents repères sont sensibles à la lumière émise par la source 38 pour permettre, la nuit, de visualiser l'emplacement du tableau de commande et de pouvoir amener le bouton 40 dans une position choisie, lorsque l'index porté par le bouton est mis en vis-à-vis d'un repère du panneau de façade.

Conformément à l'invention, la gorge 58 et la nervure 60 empêchent la lumière provenant de la source 38 de passer dans l'espace annulaire ménagé entre le bouton 40 et le bord de l'ouverture circulaire 62.

Par ailleurs, l'aménagement de la gorge et de la nervure précitée autorise le montage et le démontage du panneau de façade 12, sans qu'il soit nécessaire de démonter ou remonter le bouton 40.

L'invention trouve une application particulière dans les tableaux de commande des appareils de chauffage-ventilation de véhicules automobiles. Le tableau de commande peut comporter un ou plusieurs boutons rotatifs.

## Revendications

1. Tableau de commande comprenant un panneau de façade (12) ménageant au moins une ouverture circulaire (62), un bouton de commande rotatif (40) logé dans l'ouverture circulaire, une source de lumière (38) placée en arrière du panneau de façade et des repères (64) portés par le panneau de façade et/ou le bouton de commande et sensibles à la lumière émise par la source, ce bouton de commande étant muni d'une gorge périphérique circulaire (58) dans laquelle pénètre une nervure circulaire (60) rattachée au panneau de façade (12) et entourant l'ouverture circulaire (62), caractérisé en ce que, dans le but d'empêcher la lumière de passer entre le panneau de façade (12) et le bouton de commande (40), la gorge périphérique circulaire (58) tourne sa concavité vers l'avant, du côté opposé à la source de lumière (38), tandis que la nervure circulaire (60) s'étend vers l'arrière, du côté de la source de lumière (38).

2. Tableau de commande selon la revendication 1, caractérisé en ce que la gorge (58) et la nervure sont en un matériau absorbant ou réfléchissant la lumière ou revêtues d'un tel matériau.

3. Tableau de commande selon l'une des revendications 1 à 2, dans lequel le bouton de commande (40) comprend une robe cylindrique (54), caractérisé en ce que la gorge périphérique circulaire (58) est formée par un bord (56) roulé vers l'extérieur qui prolonge la robe cylindrique.

4. Tableau de commande selon l'une des revendications 1 à 3, caractérisé en ce que la gorge périphérique circulaire (58) comporte un fond à section semi-circulaire.

5. Tableau de commande selon l'une des revendication 1 à 4, caractérisé en ce que la nervure circulaire (60) s'étend dans une direction sensiblement perpendiculaire par rapport au panneau de façade (12).

6. Tableau de commande selon l'une des revendications 1 à 5, caractérisé en ce que la gorge périphérique circulaire (58) et la nervure circulaire (60) ménagent entre elles un jeu maximal (j) de 1mm.

7. Tableau de commande selon l'une des revendications 1 à 6, comprenant une boîte à lumière (22) sur laquelle est monte le panneau de façade (12), caractérisé en ce que le panneau de façade (12) est installé sur la boîte à lumière (22) préalablement équipée de bouton (40), la nervure circulaire (60) du panneau de façade (12) venant, au montage, pénétrer dans la gorge périphérique circulaire (58) du bouton de commande (40).

## Claims

1. A control panel comprising a front panel (12) defining at least one circular aperture (62), a rotary control knob (40) mounted in the circular aperture, a light source (38) placed behind the front panel, and markings (64) carried by the front panel and/or the control knob and sensitive to the light emitted by the source, the control knob being provided with a circular peripheral groove (58) into which there penetrates a circular rib (60) attached to the front panel (12) and surrounding the circular aperture (62), characterised in that the circular peripheral groove (58) is concave towards the front, on the side opposite to the light source (38), while the circular rib (60) extends backwards on the same side as the light source (38), whereby to prevent the light from passing between the front panel (12) and the control knob (40).

2. A control panel according to Claim 1, characterised in that the groove (58) and the rib are of a material absorbent or reflective to light, or coated with such a material.

3. A control panel according to Claim 1 or Claim 2, in which the control knob (40) comprises a cylindrical shroud (54) characterised in that the circular peripheral groove (58) is defined by an outwardly rolled edge portion (56) which extends the cylindrical shroud.

4. A control panel according to one of Claims 1 to 3, characterised in that the circular peripheral groove (58) has a base with a semicircular cross section.

5. A control panel according to one of Claims 1 to 4, characterised in that the circular rib (60) extends in a direction substantially at right angles with respect to the front panel (12).

6. A control panel according to one of Claims 1 to 5, characterised in that the circular peripheral groove (58) and the circular rib (60) define between them a maximum clearance (j) of 1 mm.

7. A control panel according to one of Claims 1 to 6, comprising a light box (22) on which the front panel (12) is mounted, characterised in that the front panel (12) is installed on the light box (22) already equipped with the knob (40), the circular rib (60) of the front panel (12) being caused during the fitting operation to penetrate into the circular peripheral groove (58) of the control knob (40).

## Patentansprüche

1. Steuertafel, umfassend eine Frontplatte (12) mit mindestens einer kreisförmigen Öffnung (62), einen in die kreisförmige Öffnung eingesetzten Bedienungsdrehknopf (40), eine an der Rückseite der Frontplatte angeordnete Lichtquelle (38) und an der Frontplatte und/oder am Bedienungsknopf angebrachte und für das durch die Lichtquelle abgestrahlte Licht empfindliche Markierungen (64), wobei dieser Bedienungsknopf mit einer kreisförmigen Umfangsauskehlung (58) versehen ist, in die eine kreisförmige Rippe (60) eingreift, die an die Frontplatte (12) angefügt ist und die kreisförmige Öffnung (62) umgibt, **dadurch gekennzeichnet,** daß, um den Durchtritt des Lichts zwischen der Frontplatte (12) und dem Bedienungsknopf (40) zu verhindern, die Austiefung der kreisförmigen Umfangsauskehlung (58) nach vorne, entgegengesetzt zur Lichtquelle (38), gerichtet ist, während sich die kreisförmige Rippe (60) nach hinten, auf der Seite der Lichtquelle (38), erstreckt.

2. Steuertafel nach Anspruch 1, **dadurch gekennzeichnet,** daß die Auskehlung (58) und die Rippe aus einem Licht absorbierenden oder reflektierenden Werkstoff bestehen oder mit einem solchen Werkstoff beschichtet sind.

3. Steuertafel nach einem der Ansprüche 1 bis 2, bei der der Bedienungsknopf (40) eine zylindrische Umhüllung (54) umfaßt , **dadurch gekennzeichnet,** daß die kreisförmige Umfangsauskehlung (58) durch eine nach außen rundgebogene Kante (56) gebildet wird, die die zylindrische Umhüllung verlängert.

4. Steuertafel nach einem der Ansprüche 1 bis 3, **dadurch gekennzeichnet,** daß die kreisförmige Umfangsauskehlung (58) einen Boden mit halbkreisförmigem Querschnitt umfaßt.

5. Steuertafel nach einem der Ansprüche 1 bis 4, **dadurch gekennzeichnet,** daß sich die kreisförmige Rippe (60) in einer Richtung in etwa senkrecht zur Frontplatte (12) erstreckt.

6. Steuertafel nach einem der Ansprüche 1 bis 5, **dadurch gekennzeichnet**, daß zwischen der kreisförmigen Umfangsauskehlung (58) und der kreisförmigen Rippe (60) ein maximales Spiel (j) von 1 mm vorgesehen ist.

7. Steuertafel nach einem der Ansprüche 1 bis 6, umfassend ein Leuchtgehäuse (22), auf dem die Frontplatte (12) angebracht ist , **dadurch gekennzeichnet,** daß die Frontplatte (12) auf dem zuvor mit dem Drehknopf (40) bestückten Leuchtgehäuse (22) eingebaut ist, wobei die ringförmige Rippe (60) der Frontplatte (12) bei der Montage in die kreisförmige Umfangsauskehlung (58) des Bedienungsknopfes (40) eingreift.
